# EUROPÄISCHE PATENTSCHRIFT

(11) **EP 3 504 289 B1**
(45) Veröffentlichungstag und Bekanntmachung des Hinweises auf die Patenterteilung: **22.01.2020**
(21) Anmeldenummer: 17754682.7
(22) Anmeldetag: 11.08.2017
(51) Int. Cl.: C09K 5/10, F01K 25/08, F22B 1/00

(54) **KREISPROZESSE MIT ÜBERKRITISCHEN SILOXANEN**
CYCLIC PROCESSES WITH SUPERCRITICAL SILOXANES
CYCLES DE TRAVAIL À SILOXANES SURCRITIQUES

(43) Veröffentlichungstag der Anmeldung: 03.07.2019
(73) Patentinhaber: Wacker Chemie AG, 81737 München (DE)
(72) Erfinder: VOIT, Harald, 84571 Reischach (DE); DÖRRICH, Steffen, 81827 München (DE); PETRI, Martin, 84547 Emmerting (DE); SCHAFFER, Erich, 5122 Duttendorf (AT); WEIDNER, Richard, 84489 Burghausen (DE)
(74) Vertreter: Mai, Marit
(86) Internationale Anmeldenummer: PCT/EP2017/070499
(87) Internationale Veröffentlichungsnummer: WO 2019/029829

(56) Entgegenhaltungen:
- DE-A1- 10 008 123
- DE-A1- 19 858 712
- DE-A1-102011 119 977
- DE-A1-102012 211 258
- DE-A1-102015 202 158
- Erich Schaffer ET AL: "CREATING TOMORROS SOLUTIONS Content", 19.Kölner Sonnenkolloquium, 6. Juli 2016 (2016-07-06), XP055468365, Gefunden im Internet: URL:http://www.dlr.de/sf/Portaldata/73/Res ources/dokumente/soko/soko2016/DLR-Sonnenk olloquium2016_Schaffer_(Wacker)_HELISOL-Ei n_Siliconoel_fuer_CSP_Kraftwerke.pdf [gefunden am 2018-04-18]

## Beschreibung

Die Erfindung betrifft Kreisprozesse mit überkritischen Siloxanen als Hochtemperaturwärmeträgerfluid (HTF).

In solarthermischen Kraftwerken wird die Sonneneinstrahlung z.B. über Parabolspiegel konzentriert (CSP = Concentrated Solar Power) und auf ein Hochtemperaturwärmeträgerfluid (HTF) übertragen. Das HTF gibt in einem Kreisprozess die eingekoppelte Wärme an einen Wärmeverbraucher ab, bevor es im Solarfeld erneut Wärme aufnimmt. Der Wärmeverbraucher ist nach Stand der Technik ein thermisches Dampfkraftwerk, in dem in einem oder einer Schaltung aus mehreren Wärmetauschern Wärme aus dem primären HTF-Kreislauf auf einen sekundären Clausius Rankine Prozess übertragen wird. Dabei wird zunächst Wasser bei hohem Druck verdampft und überhitzt. Der überhitzte Dampf wird dann in einer oder einer Verschaltung aus mehreren Dampfturbinen entspannt und erzeugt dabei mechanische Arbeit. Anschließend wird der entspannte Dampf kondensiert und das Kondensat mit einer Speisewasserpumpe auf den hohen Druck verdichtet, bei dem dann erneut Wärme aufgenommen und überhitzter Dampf erzeugt wird.

Stand der Technik in Sonnenwärmekraftwerken ist der Einsatz von inkompressiblen Hochtemperaturwärmeträgerfluiden im flüssigen Zustand im gesamten Temperatureinsatzbereich mit Wärmeabgabe an einen sekundären Dampfprozess und alleinige Umwandlung von thermischer Energie in mechanische Arbeit im sekundären Dampfkraftprozess.

DE 198 58 712 A1 beschreibt ein Verfahren zur Umwandlung thermischer Energie in mechanische Arbeit mittels Kreisprozess, wobei der Wärmeträger ein in der Dampfphase befindliches Polysiloxan oder ein Polysiloxan- Stoffgemisch ist, der in der Dampfphase befindliche Wärmeträger ein zyklisches Polysiloxan oder ein zyklisches Polysiloxan Stoffgemisch ist, das Polysiloxane linear mit vorwiegend n < 5 und zyklisch mit n < 6 in reiner Form oder als Stoffgemische verwendet wird.

DE 100 08 123 A1 beschreibt eine Vorrichtung zur Energieumwandlung auf der Basis von thermischen ORC-Kreisprozessen, dadurch gekennzeichnet, dass die für den ORC-Kreisprozess notwendige Energie mittels eines oder mehrerer Solarkollektoren bereitgestellt wird, wobei in dem oder den Solarkollektoren ein organisches Medium, vorzugsweise Hexamethyldisiloxan strömt, das Hexamethyldisiloxan im Kreisprozess oberhalb der kritischen Temperatur im Bereich von 240 bis <= 500°C bevorzugt 400°C einer Erwärmung und Überhitzung unterworfen ist.

DE 199 07 512 A1 beschreibt eine Vorrichtung zur Energieumwandlung auf der Basis von thermischen ORC-Kreisprozessen, umfassend eine mindestens zweistufige kaskadierte Anordnung, das Fluid des Hochtemperaturkreislaufes Wasser und das Fluid des Niedertemperaturkreislaufes ein organisches Medium oder Siloxan ist.

DE 10 2007 009 503 B4 beschreibt ein Verfahren zur ORC-Kreislaufführung für Dampfprozesse, das durch mindestens zwei Wärmequellen unterschiedlicher Temperatur vorgewärmte und verdampfte dampfförmige ORC-Arbeitsfluid in mindestens zwei Arbeitsstufen entspannt wird.

Gegenstand der Erfindung sind Kreisprozesse mit Siloxanen als Hochtemperaturwärmeträgerfluid (HTF), bei denen die Siloxane durch Wärmeaufnahme ohne Phasenübergang aus dem Zustand der unterkühlten Flüssigkeit in den Zustand des überkritischen Fluids hoher Dichte übergehen und danach ohne Phasenübergang Energie vorzugsweise als Wärme oder Arbeit abgeführt wird.

Die Kreisprozesse sind möglich, weil Siloxane noch im Zustand des überkritischen Fluids temperaturstabil sind. Siloxane als HTF ermöglichen eine Kreisprozessführung des HTF zur Wärmeaufnahme aus dem Zustand der unterkühlten Flüssigkeit in den Zustand überkritisches Fluid hoher Dichte. Im Zustand überkritisches Fluid ist ein Dampfdruck allein als Funktion der Temperatur, wie bei Wärmeträgerfluiden nach dem Stand der Technik üblich, nicht existent. Das überkritische Fluid folgt den Gesetzen eines realen Gases. Die Dichte des HTF ist im Bereich des überkritischen Fluids eine Funktion von Temperatur und Druck, d.h. durch den aufgeprägten Druck einstellbar.
Der funktionelle Zusammenhang kann durch eine Zustandsgleichung (EOS: Equation of State) beschrieben werden. Bei erfindungsgemäßer vorteilhafter Druckwahl ist eine Verwendung von Siloxanen als HTF bis in den überkritischen Zustand ohne Einschränkung möglich.

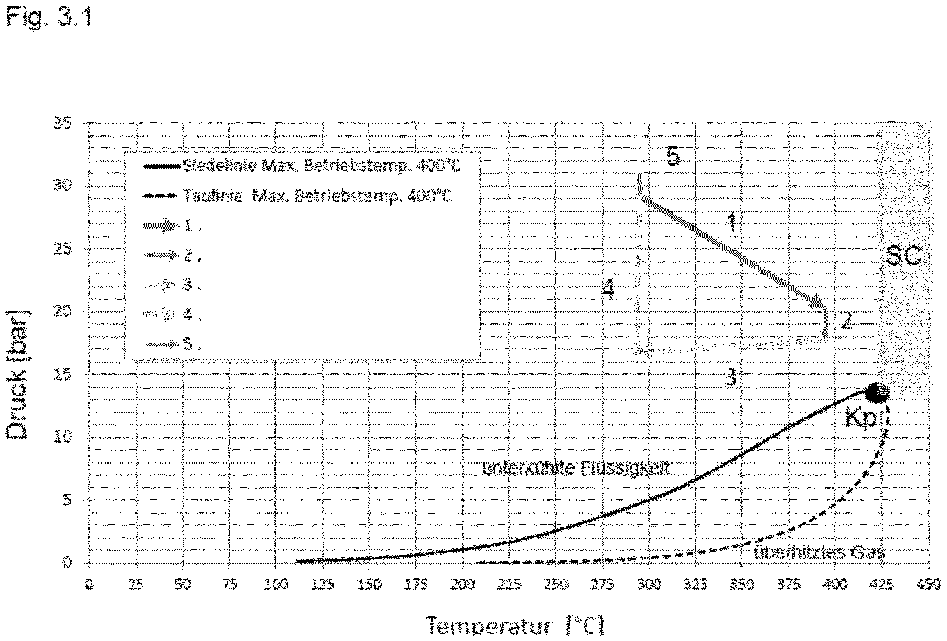

Der Bereich der unterkühlten Flüssigkeit ist der Bereich oberhalb der Siedelinie, wie in Fig. 3.1 bis 3.5 erkennbar. Wenn man bei der gleichen Temperatur über die Siedelinie hinaus zu einem höheren Druck geht, dann ist die Flüssigkeit unterkühlt, weil man dann bei diesem Druck nach rechts zu einer höheren Temperatur gehen müsste, damit die Flüssigkeit siedet.

Bisherige Wärmeträgerfluide sind auf den Einsatzbereich < 400°C beschränkt. Neue vorteilhafte Wärmeträgerfluide, beispielsweise Gemische, bestehend aus linearen und zyklischen Siloxanen und Silanen können aufgrund ihrer exzellenten Temperaturstabilität auch im Temperaturbereich 400°C bis 450°C, vorzugsweise bis 425°C eingesetzt werden.
Aufgrund der Zusammensetzung als Mischung mit Siloxanen mit bis zu 20 und mehr Siliciumatomen und der hohen kritischen Temperaturen > 425°C bereits bei Siloxanen mit mehr als 9 Siliciumatomen ging man bisher davon aus, dass solche Gemische auch im Temperaturbereich 400 bis 450°C einen Dampfdruck (Siedelinie) besitzen und sich bei einer Druckbeaufschlagung über dem Dampfdruck näherungsweise wie eine inkompressible Flüssigkeit verhalten.

Oberhalb der kritischen Temperatur, die bei Wärmeträgerfluiden aus Siloxanen vorzugsweise zwischen 400 und 450°C liegt, kann ohne Phasenübergang ein beliebiger Druck eingestellt werden. Ein Dampfdruck, wie bisher angenommen wurde, ist dort nicht existent.
Das Wärmeträgerfluid ist im Bereich oberhalb der kritischen Temperatur ein reales Gas. Durch Druck und Temperatur wird die Dichte eingestellt.

In den Kreisprozessen können Siloxane in Solarkraftwerken in Receiverrohren in den Solarfeldern bei Drücken oberhalb ihres kritischen Druckes phasenübergangsfrei vom Zustand der unterkühlten Flüssigkeit in den Zustand des überkritischen Fluids mit hoher Dichte im Temperaturbereich bis über 400°C, vorzugsweise bis 425°C erhitzt werden. Ein Phasenübergang mit einer unstetigen großen Änderung der Stoffwerte vom Zustand einer Flüssigkeit in den Zustand eines Gases, wie er bei der Temperaturerhöhung bei Drücken unter dem kritischen Druck im Zweiphasengebiet zwischen Siede- und Tauline auftritt, bleibt aus. Dieser würde in einem Solarfeld in einem mehrere Kilometer langem Rohrleitungsnetz und einer Vielzahl von parallelen Loops zu nicht beherrschbaren Instabilitäten führen.

In einer Ausführungsform werden die Siloxane im Zustand des überkritischen Fluids abgekühlt und geben dabei Wärme an einen Wärmeverbraucher ab, z.B. an einen Sekundärkreisprozess. Die Siloxane gehen dabei aus dem überkritischen Zustand zurück in den Zustand der unterkühlten Flüssigkeit. Vorzugsweise werden die Siloxane auf den Ausgangsdruck rückverdichtet.

In einer weiteren Ausführungsform werden die Siloxane im Zustand des überkritischen Fluids zur direkten Erzeugung mechanischer Arbeit zunächst unter ihren kritischen Druck entspannt und erst anschließend zur Wärmeabgabe an einen Wärmeverbraucher z.B. Sekundärkreisprozess abgekühlt, kondensiert und schließlich vorzugsweise auf den Ausgangsdruck zurückverdichtet.

Durch die Direktentspannung und Erzeugung zusätzlicher mechanischer Arbeit unmittelbar im Hochtemperaturwärmeträgerkreisprozess kann bei einer Optimierung des Druckniveaus der Sekundärdampfkraftprozess z.B. durch Reduzierung der Druckstufe einfacher und preiswerter ausgeführt werden.

Bestehende Powerblocklayouts für konventionelle Wärmeträgerfluide können direkt für Siloxane übernommen werden, wenn eine Entspannung der Siloxane so durchgeführt wird, dass ihre Temperatur danach 5-10°C über der Temperatur des überhitzten Wasserdampfes (z.B. 385°C) liegt und ihre Kondensation 5-10°C über der Speisewasservorwärmtemperatur abgeschlossen ist, die etwas unterhalb der Sattdampftemperatur beim Wasserdampfdruck (z.B. 120 bar)liegt.

ORC-Turbinen können aufgrund ihrer Betriebscharakteristik Lastschwankungen einfacher, schneller und vollautomatisch ausregeln als Dampfturbinen.

Vorzugsweise bestehen die als HTF eingesetzten Siloxane aus Methylpolysiloxanen, wie Helisol® (Wacker Chemie AG), insbesondere aus linearen, cyclischen oder verzweigten Methylpolysiloxanen oder Gemischen davon.

Besonders geeignet sind Gemische aus kurzkettigen und langkettigen Siloxanen. Durch Stoffdatenmessungen und Simulationen konnte gezeigt werden, dass, obwohl die langkettigen Siloxane im einsetzbaren Temperaturbereich bis 450°C unterhalb ihrer kritischen Temperatur vorliegen, die kritische Temperatur des Gemisches im einsetzbaren Temperatureinsatzbereich bereits ab etwas über 400°C überschritten wird. Die langkettigen und schwersiedenden Siloxane werden also offenbar durch die bereits überkritisch vorliegenden Siloxane gelöst, so dass ein insgesamt überkritisches Verhalten des Gemisches vorliegt, obwohl sich ein signifikanter Anteil an Siloxanen im Gemisch noch deutlich unter seiner kritischen Temperatur befindet.

Wenn sich die Gemische aus kurzkettigen und langkettigen Siloxanen im Zustand des überkritischen Fluids befinden, liegen vorzugsweise mindestens 10 Gew.-%, insbesondere mindestens 20 Gew.-% der Siloxane, im unterkritischen Zustand vor.

Bevorzugt als Siloxangemische sind Gemische aus Methylpolysiloxanen, ausgewählt aus linearen Verbindungen der allgemeinen Formel I

Me₃SiO-(Me₂SiO)ₓ-SiMe₃ (I),

und cyclischen Verbindungen der allgemeinen Formel II

(Me₂SiO)_{y} (II),

wobei
- **Me**: Methylrest bedeutet,
- **x**: Werte größer oder gleich Null aufweist und der mit den Stoffmengenanteilen gewichtete arithmetische Mittelwert von **x** über alle linearen Methylpolysiloxane zwischen 3 und 20 liegt und
- **y**: Werte größer oder gleich 3 aufweist und der mit den Stoffmengenanteilen gewichtete arithmetische Mittelwert von **y** über alle cyclischen Methylpolysiloxane zwischen 3 und 6 liegt.

Die Variable **x** nimmt bevorzugt Werte zwischen Null und 100, besonders bevorzugt zwischen Null und 70, ganz besonders bevorzugt zwischen Null und 40 an. Der mit den Stoffmengenanteilen gewichtete arithmetische Mittelwert von **x** über alle linearen Methylpolysiloxane liegt bevorzugt zwischen 4 und 15, besonders bevorzugt zwischen 5 und 10, jeweils einschließlich der genannten Grenzwerte.
Die Variable **y** nimmt bevorzugt Werte zwischen 3 und 100, besonders bevorzugt zwischen 3 und 70, ganz besonders bevorzugt zwischen 3 und 40 an. Der mit den Stoffmengenanteilen gewichtete arithmetische Mittelwert von **y** über alle cyclischen Methylpolysiloxane liegt bevorzugt zwischen 3,5 und 5,5, besonders bevorzugt zwischen 4 und 5, insbesondere zwischen 4 und 4,5, jeweils einschließlich der genannten Grenzwerte.

Das Zahlenverhältnis der Me₃Si-Kettenendgruppen in den Verbindungen der allgemeinen Formel I zur Summe aus Me₂SiO-Einheiten in den Verbindungen der allgemeinen Formeln I und II beträgt vorzugsweise mindestens 1 : 2 und höchstens 1 : 10. Das Zahlenverhältnis der Me₃Si-Kettenendgruppen in der allgemeinen Formel I zur Summe aus Me₂SiO-Einheiten in den allgemeinen Formeln I und II beträgt bevorzugt mindestens 1 : 2,5 und höchstens 1 : 8, insbesondere bevorzugt mindestens 1 : 3 und höchstens 1 : 6.

Vorzugsweise beträgt die Summe der Anteile aller cyclischen Methylpolysiloxane der allgemeinen Formel II mindestens 10 Massen-%, besonders bevorzugt mindestens 12,5 Massen-%, insbesondere mindestens 15 Massen-% und höchstens 40 Massen-%, besonders bevorzugt höchstens 35 Massen-% und insbesondere höchstens 30 Massen-%.

Ebenfalls bevorzugt sind Methylpolysiloxane, ausgewählt aus verzweigten Verbindungen der allgemeinen Formel III

(Me₃SiO_{1/2})w (SiO_{4/2})_{z}, (III)

in der
- **w**: ganzzahlige Werte von 4 bis 20,
- **z**: ganzzahlige Werte von 1 bis 15 und
- **Me**: Methylrest bedeuten.

Die Einheiten (Me₃SiO_{1/2})_{w} werden als M-Gruppen und (SiO_{4/2})_{z} als Q-Gruppen bezeichnet.

Vorzugsweise bedeutet **w** ganzzahlige Werte bis 15.
Vorzugsweise bedeutet **z** ganzzahlige 1 bis 5.
Vorzugsweise beträgt **w + z** Werte bis 50, insbesondere bis 20.

Besonders geeignet zur Durchführung der Kreisprozesse sind Gemische aus Methylpolysiloxanen, bei denen mindestens 95 Gew.-%, insbesondere mindestens 98 Gew.-% der Methylpolysiloxane die Werte **z** = 1 und **w** = 4 aufweisen. Die Methylpolysiloxane mit **z** = 1 und **w** = 4 werden auch als QM₄ bezeichnet.

Die Viskosität der HTF bei 25°C beträgt bevorzugt 1 bis 100 mPa*s, besonders bevorzugt 1 bis 10 mPa*s, jeweils gemessen mit dem Viskosimeter µVISK der Firma RheoSense Inc.

Die HTF kann in einer monomodalen, bimodalen oder multimodalen Molmassenverteilung vorliegen, gleichzeitig kann die Molmassenverteilung eng oder breit sein.

Die Temperaturen der HTF im Solarfeld im Tagbetrieb betragen vorzugsweise bis 490°C, insbesondere 150°C bis 475°C, insbesondere bevorzugt 250°C bis 450°C.

Der Druck im HTF Kreisprozess beträgt vorzugsweise bis 1 bis 50 bar, insbesondere 15 bis 40 bar, insbesondere bevorzugt 16 bis 35 bar.

Übersicht der Zeichnungen:
Fig. 1: Verallgemeinerter Wärmeträgerkreisprozess nach Stand der Technik.
Fig. 1a: Ein primärer Wärmeträgerkreisprozess ist mit einem sekundären Kreisprozess zur Gewinnung mechanischer Arbeit (A) gekoppelt.
Fig. 1b: Ein CSP-Kraftwerk wird mit Wärmeträgerfluid (HTF) betrieben, wobei ein primärer Wärmeträgerkreisprozess mit einem sekundären Kreisprozess zur Gewinnung mechanischer Arbeit (A) gekoppelt ist.
Fig. 2: Ein Wärmeträgerfluid wird über seine kritische Temperatur hinaus erwärmt und dann als überkritisches Fluid auf einen Druck unterhalb seines kritischen Druckes zur Verrichtung mechanischer Arbeit entspannt, bevor es Wärme an einen Wärmeverbraucher abgibt.
Fig. 2a: Ein CSP-Kraftwerk wird mit einem Wärmeträgerfluid betrieben, wobei Wärmeträgerfluid über seine kritische Temperatur hinaus erwärmt wird und dann als überkritisches Fluid auf einen Druck unterhalb seines kritischen Druckes zur Verrichtung mechanischer Arbeit entspannt wird, bevor es Wärme an einen Wärmeverbraucher abgibt.
Fig. 3.1: Erwärmung von HELISOL® 5A nur bis unter den kritischen Punkt, Wärmeabgabe ohne Arbeitsverrichtung, nach Stand der Technik.
Fig. 3.2: Erwärmung von HELISOL® 5A bis über den kritischen Punkt, Wärmeabgabe ohne Arbeitsverrichtung.
Fig. 3.3: Erwärmung von HELISOL® 5A bis über den kritischen Punkt, Entspannung mit Arbeitsverrichtung vor Wärmeabgabe.
Fig. 3.4: Erwärmung von QM4 bis über den kritischen Punkt, Wärmeabgabe ohne Arbeitsverrichtung.
Fig. 3.5: Erwärmung von QM4 bis über den kritischen Punkt, Entspannung mit Arbeitsverrichtung vor Wärmeabgabe

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Beispiel 1

### Zeigt den Stand der Technik: Das Wärmeträgerfluid wird oberhalb seines Dampfdruckes nur bis unter seine kritische Temperatur erwärmt, d.h. liegt überall als Flüssigkeit vor.

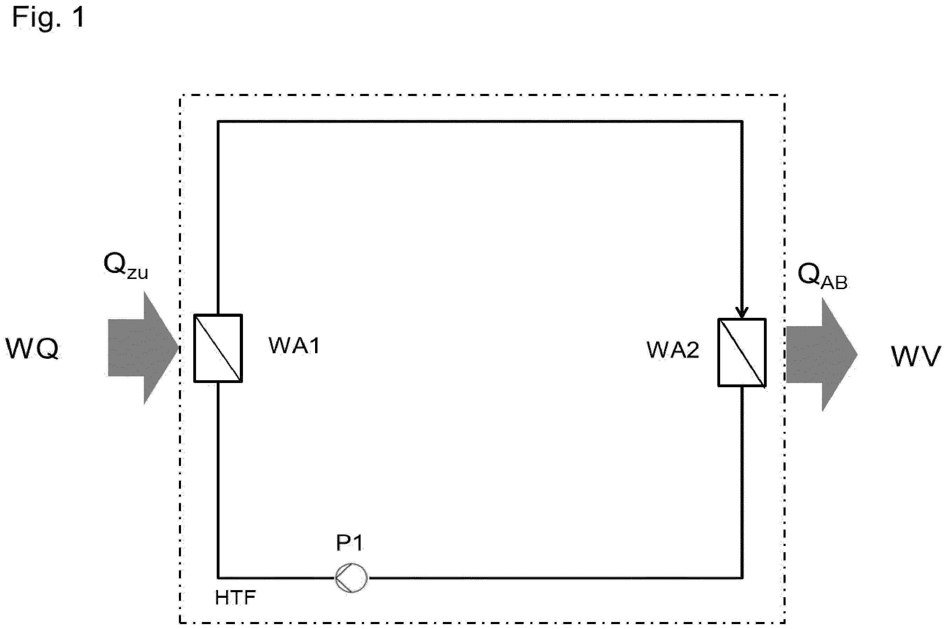

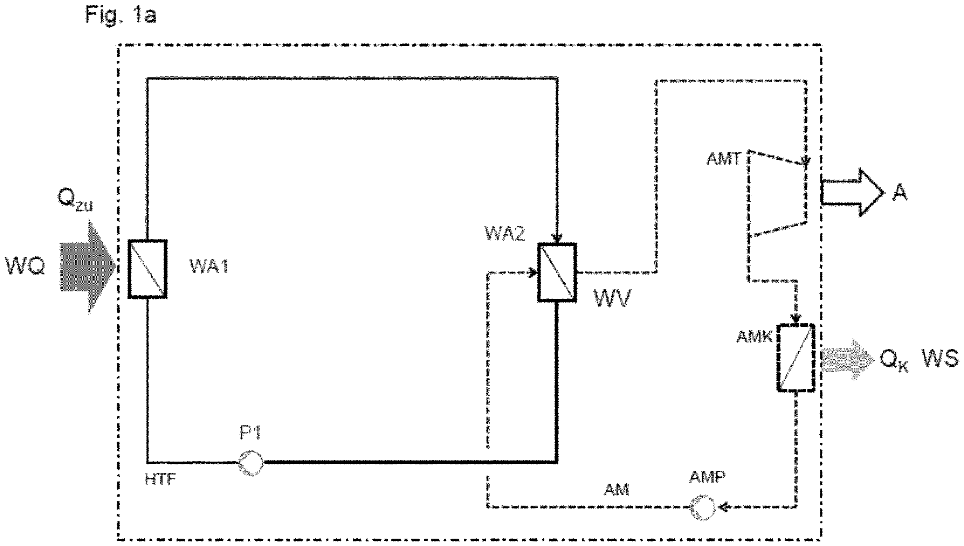

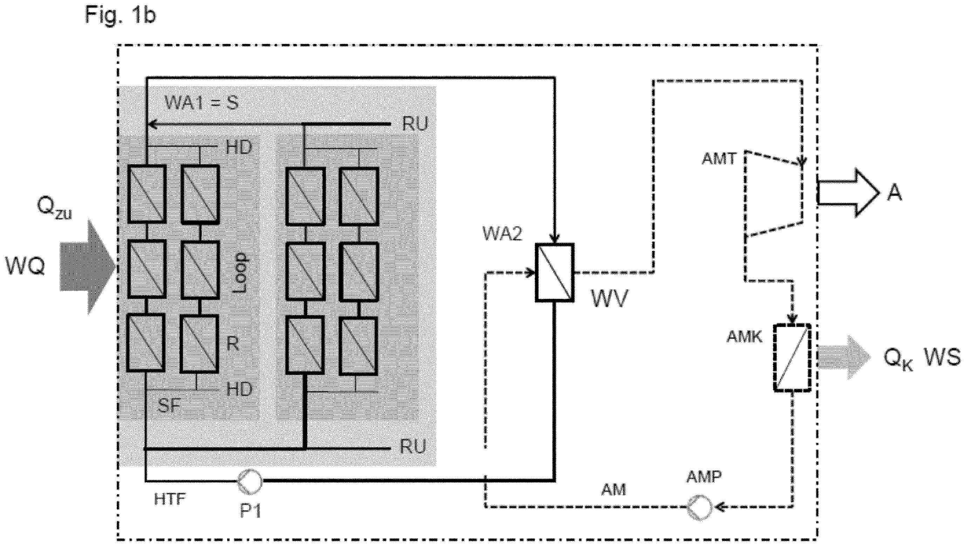

In einem verallgemeinerten Wärmeträgerkreisprozess nach Stand der Technik (Fig. 1) wird von einer Wärmequelle (WQ) eine Wärmemenge (Qzu) in einem Wärmeaustauscher (WA1) an ein Hochtemperaturwärmeträgerfluid (HTF) übertragen und im Wärmeaustauscher (WA2) an einen Wärmeverbraucher (WV) wieder abgegeben (Qk). Das Wärmeträgerfluid nach Stand der Technik ist eine Flüssigkeit bei einem Druck über ihrem Dampfdruck und überträgt einen Wärmestrom von einer Wärmequelle mit höherer Temperatur an einen Wärmeverbraucher bei niedrigerer Temperatur ohne Verrichtung mechanischer Arbeit. Die Wärmeträgerpumpe (P1) ist zur Überwindung des Druckverlustes im Wärmeträgerkreisprozess notwendig.

Häufig ist ein primärer Wärmeträgerkreisprozess mit einem sekundären Kreisprozess zur Gewinnung mechanischer Arbeit (A) gekoppelt (Fig. 1a). Der Wärmeverbraucher (WV) ist in diesem Fall der sekundäre Kreisprozess, der mit einem Arbeitsmedium (AM) betrieben wird.
Das Arbeitsmedium wird auf der Sekundärseite des Wärmeaustauschers (WA2) durch Aufnahme der Wärme aus dem primären Wärmeträgerkreisprozess bei hohem Druck verdampft, um bei der Entspannung in der Turbine (AMT) auf einen niedrigen Druck mechanische Arbeit (A) zu erzeugen. Danach wird das Arbeitsmedium im Kondensator (AMK) kondensiert und mittels Speisewasserpumpe (AMP) wieder auf den hohen Druck für die Verdampfung verdichtet. Der Druck, auf den das Arbeitsmedium in der Turbine (AMT) entspannt werden kann, entspricht dem Dampfdruck des Arbeitsmediums (AM) bei der Kondensationstemperatur im Kondensator (AMK), die größer als die Temperatur der am Standort verfügbaren Wärmesenke (WS) sein muß, um die Kondensationswärme (Qk) aufnehmen zu können.

Im speziellen Fall eines solarthermischen Kraftwerks (CSP) ist die Wärmequelle (WQ) die Sonne (Fig. 1b). Die Strahlungswärme (Qzu) wird im Solarfeld (S) an das Wärmeträgerfluid(HTF) übertragen. Das Solarfeld (S) ist eine besondere Ausführung eines Wärmeaustauschers (WA1) und besteht in der Regel aus mehreren Unterfeldern (SF), die jeweils aus einer Vielzahl von parallelen (Loop)'s mit in Reihe verschalteten Receivern (R) bestehen. Die Verteilungs-/Sammelleitungen für die Loops werden Header (HD) genannt, die Verbindungsleitungen zwischen den Unterfeldern und Hauptleitungen Runner (RU).

**Im konkreten Beispiel 1** wird ein CSP-Kraftwerk (Fig. 1b) mit dem Wärmeträgerfluid (HTF) HELISOL® 5A betrieben, wobei das Wärmeträgerfluid von 295°C bis 395°C, nur bis unter seine kritische Temperatur erwärmt wird und damit nach Stand der Technik im gesamten primären Wärmeträgerkreisprozess als Flüssigkeit vorliegt.
HELISOL® 5A ist ein Gemisch aus linearen Methylpolysiloxanen der allgemeinen Formel I und cyclischen Verbindungen der allgemeinen Formel II.
Bei einer maximalen Betriebstemperatur bis 400°C liegt der kritische Druck von HELISOL® 5A zwischen pcrit= 13 und 14 bar und die kritische Temperatur zwischen Tcrit= 415 und 430°C.

Im sekundären Kreisprozess wird Wasser (AM) bei 120 bar verdampft und auf 385°C überhitzt (10°C Temperaturdifferenz zur primären Wärmeträgertemperatur).
Die Kondensationstemperatur beträgt 50°C (Wärmesenke (WS) ist Umgebungsluft, kein Kühlwasser am Standort verfügbar). Für einen **idealen Carnot-Kreisprozess** ergibt sich als Grenzfall ein theoretischer, praktisch nicht erreichbarer thermischer Wirkungsgrad ηₜₕ < 1- T_{Kondensation} [K] /T_{Dampf} [K] < **50,9%.**
Mit einer Dampfturbine mit einer isentropen Effizienz von 92% ergibt sich ein **realer thermischer Wirkungsgrad des Sekundärkreisprozesses** (Turbinenleistung-Pumpenleistung)/zugeführte thermische Energie) von **34,8%.**
**In der Praxis ist für die Dampfturbine eine aufwändige mehrstufige, mindestens zweistufige Verschaltung mit Zwischenüberhitzung notwendig, da bei einer einstufigen Entspannung der Dampf zu nass würde (Dies gilt auch für die folgenden Beispiele).**
Zur Bereitstellung der Antriebsleistung für die Pumpe (P1) im primären Wärmeträgerkreisprozess werden 4,7% der im Solarfeld aufgenommenen Wärme (Qzu) verbraucht, dabei ist der reale thermische Wirkungsgrad des Sekundären Kreisprozesses zur Erzeugung mechanischer Arbeit berücksichtigt.

Für ein CSP-Kraftwerk mit der effektiven Arbeitsleistung von 50 MW muss folglich im Wärmeaustauscher (WA2) eine thermische Leistung von 150,8 MW bereitgestellt werden, zuzüglich von Wärmeverlusten.

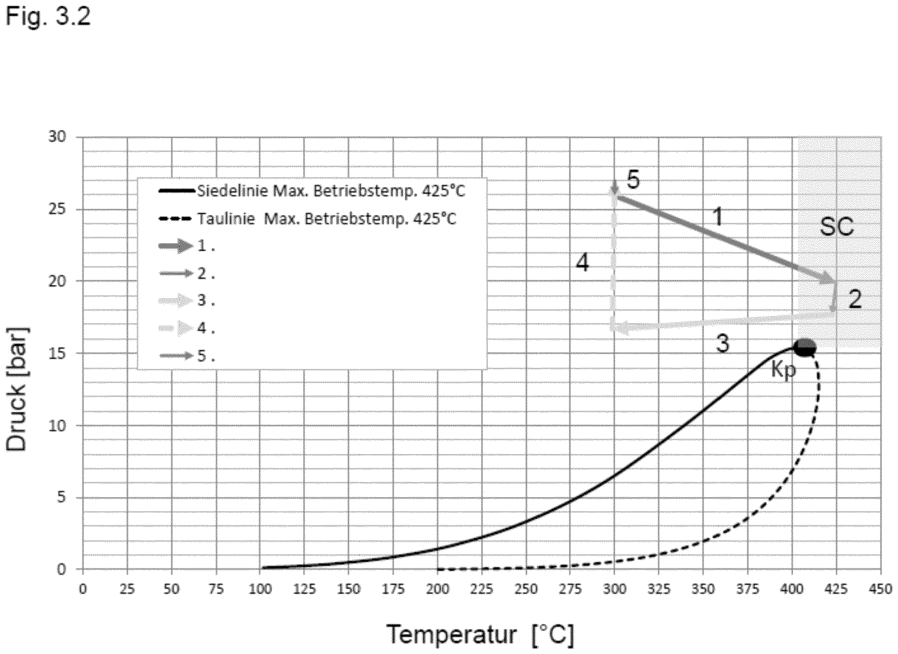

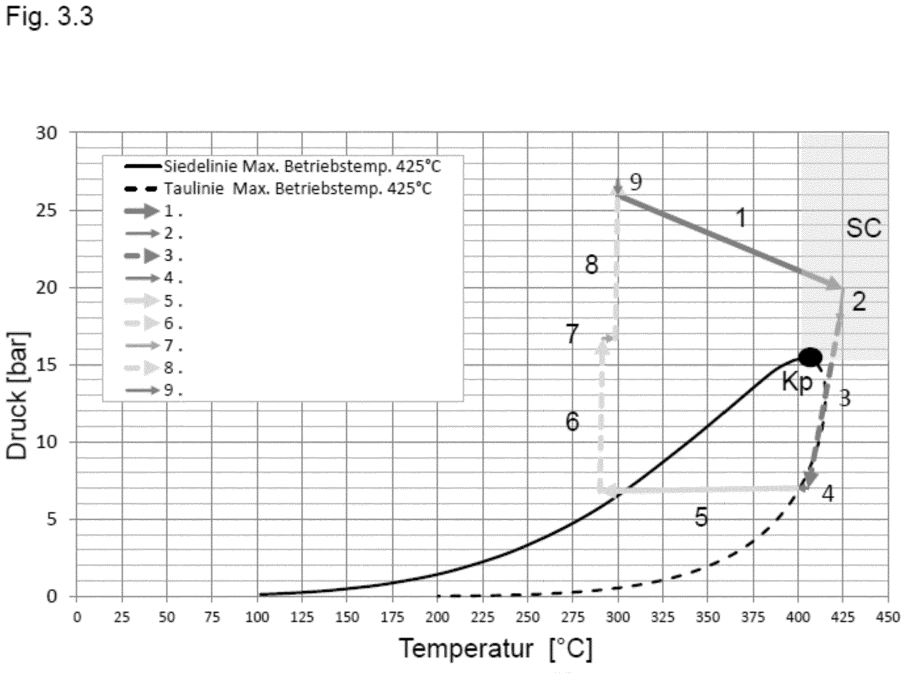

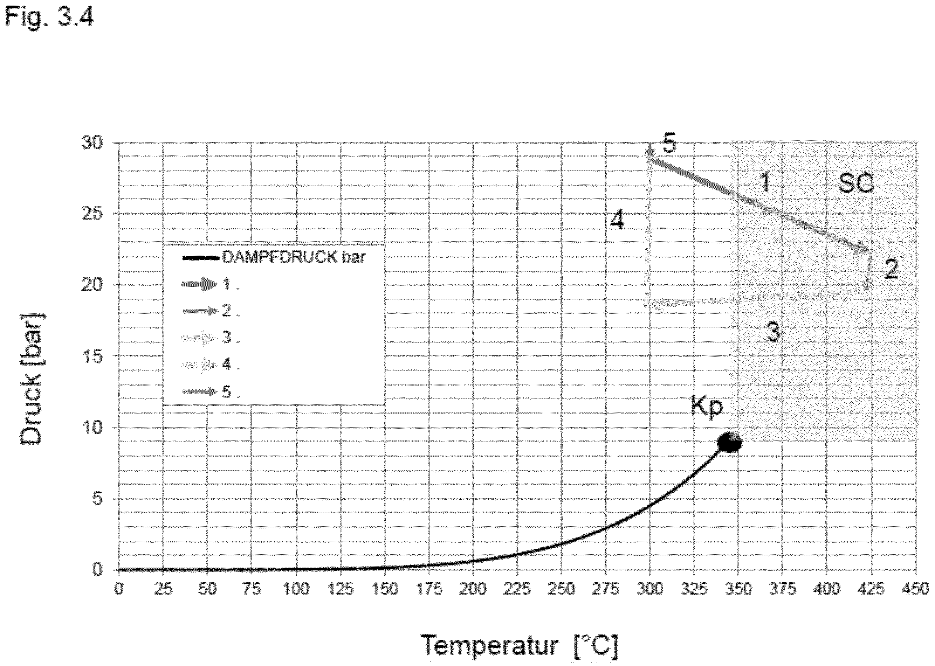

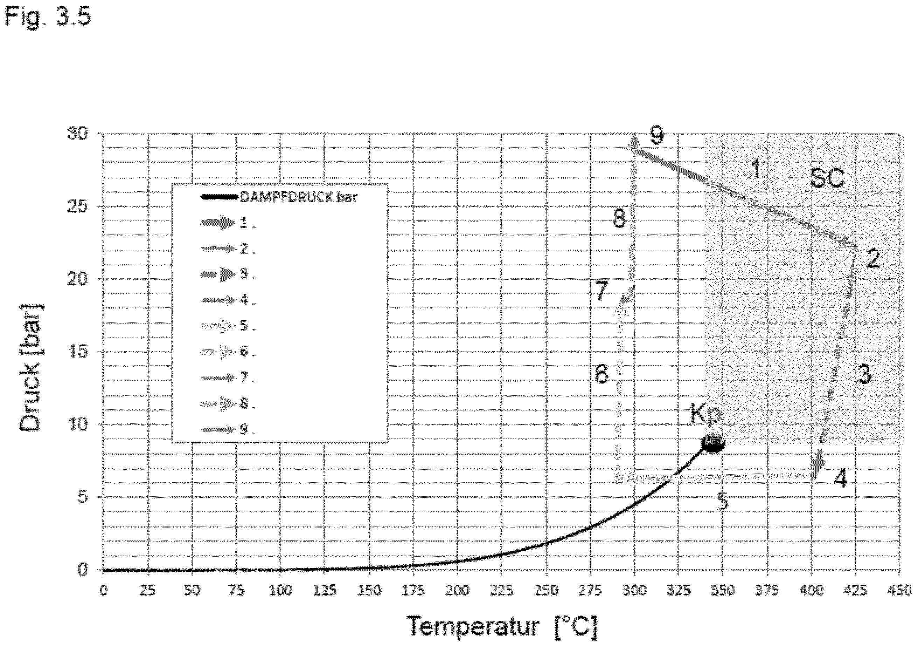

Der primäre Wärmeträgerkreisprozess ist in **Fig. 3****.****1** im TP-Diagramm dargestellt:
Wärmeaufnahme in den Solarreceiverloops (1), Druckverlust in den Sammelrohrleitungen (Header und Runner) (2), Wärmeabgabe im Wärmeaustauscher (WA2) an den sekundären Dampfturbinenkreisprozess (3), Druckerhöhung in der Wärmeträgerpumpe (P1) (4) und Druckverlust in den Verteilerrohrleitungen (Runner und Header) (5).

Zur Übertragung von 1 MW thermischer Leistung werden 17,2 t/h HELISOL® 5A benötigt, die Enthalpiedifferenz beträgt 209 KJ/kg.

### Beispiel 2

### Das Wärmeträgerfluid wird erfindungsgemäß über seine kritische Temperatur hinaus erwärmt und liegt dann als überkritisches Fluid vor, mechanische Arbeit wird nicht verrichtet.

Ein CSP-Kraftwerk (Fig. 1b) wird mit dem Hochtemperaturwärmeträgerfluid (HTF) HELISOL® 5A betrieben, wobei das Wärmeträgerfluid von 300°C bis 425°C, bis oberhalb seiner kritischen Temperatur erwärmt wird. Bei einer maximalen Betriebstemperatur von 425°C liegt der kritische Druck von HELISOL® 5A zwischen pcrit= 15 und 16 bar und die kritische Temperatur zwischen Tcrit= 400 und 410°C. Die Veränderung des kritischen Punktes wird durch die temperaturabhängige chemische Gleichgewichtseinstellung verursacht.

Der gesamte Wärmeträgerkreisprozess findet oberhalb des kritischen Druckes statt. Bei der Wärmeaufnahme im Solarfeld erfolgt eine stetige Zustandsänderung von der unterkühlten Flüssigkeit zum überkritischen Fluid hoher Dichte ohne merklichen Phasenübergang.
Dennoch verhält sich das überkritische Fluid wie ein reales Gas, d. h. es nimmt alles angebotene Volumen an, es ist kompressibel und die Dichte ist eine Funktion von Druck und Temperatur, ein "Dampfdruck" ist nicht existent.

Bei der Wärmeabgabe im Wärmeaustauscher (WA2) an einen Wärmeverbraucher (WV) findet eine Zustandsänderung vom überkritischen Fluid zurück zur unterkühlten Flüssigkeit statt. Mechanische Arbeit wird dabei nicht verrichtet, der Druckverlust muss durch die Wärmeträgerpumpe (P1) aufgebracht werden.

Der Wärmeverbraucher(WV) ist ein thermisches Dampfkraftwerk wie im Beispiel 1.

Bei der maximalen Temperatur von 425°C im primären HTF-Kreislauf kann im sekundären Kreisprozess eine Dampftemperatur von 415°C realisiert werden.
Die Kondensationstemperatur beträgt 50°C (Wärmesenke Umgebungsluft, kein Kühlwasser am Standort verfügbar). Für einen **idealen Carnot-Kreisprozess** ergibt sich als Grenzwert ein theoretischer, praktisch nicht erreichbarer thermischer Wirkungsgrad ηₜₕ < 1- T_{Kondensation} [K] /T_{Dampf} [K] < **53,0%.**

Mit einer Dampfturbine mit einer isentropen Effizienz von 92% ergibt sich ein **realer thermischer Wirkungsgrad des Sekundärkreisprozesses** (Turbinenleistung-Pumpenleistung)/zugeführte thermische Energie) von **35,2%.** (+0,4% im Vergleich zum Beispiel 1)
Zur Bereitstellung der Antriebsleistung für die Pumpe P1 im primären Wärmeträger-kreisprozess werden nur noch 2,6% der im Solarfeld aufgenommenen Wärme verbraucht.

Für ein CSP-Kraftwerk mit der effektiven Arbeitsleistung von 50 MW muss folglich nur noch eine thermische Leistung von 145,8 MW bereitgestellt werden (-3,3% im Vergleich zum Beispiel 1), zuzüglich von Wärmeverlusten.

Der primäre Wärmeträgerkreisprozess ist in **Fig. 3****.****2** für einen konkreten Fall im TP-Diagramm dargestellt.

Zur Übertragung von 1 MW thermischer Leistung werden nur noch 12,9 t/h HELISOL® 5A benötigt, die Enthalpiedifferenz beträgt 280 KJ/kg.

### Beispiel 3

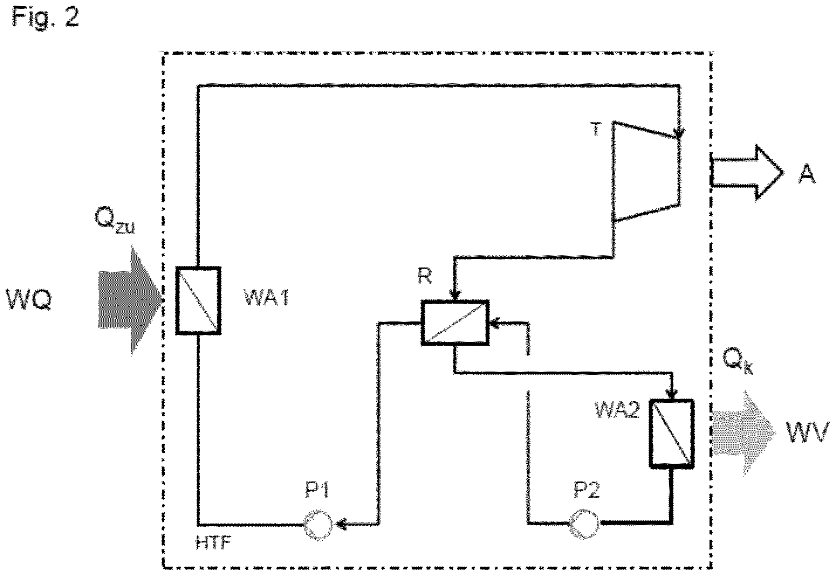

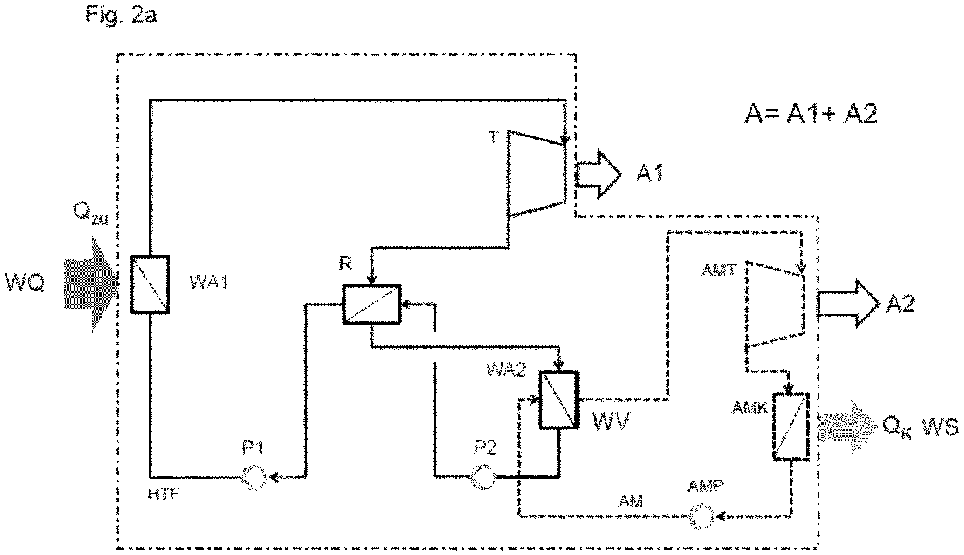

### Das Wärmeträgerfluid wird erfindungsgemäß über seine kritische Temperatur hinaus erwärmt und dann als überkritisches Fluid auf einen Druck unterhalb seines kritischen Druckes zur Verrichtung mechanischer Arbeit entspannt, bevor es Wärme an einen Wärmeverbraucher abgibt (Fig. 2)

Ein CSP-Kraftwerk (Fig. 2a, Solarfeld vereinfacht als Wärmeaustauscher WA1 dargestellt) wird mit dem Wärmeträgerfluid (HTF) HELISOL® 5A betrieben, wobei das Wärmeträgerfluid wie im Beispiel 2 in den Solarreceiverloops zunächst bis auf 425°C über seine kritische Temperatur hinaus erwärmt wird (1). In den Sammelrohrleitungen (Header und Runner) reduziert sich der Druck aufgrund des Druckverlustes (2). Danach wird das Wärmeträgerfluid ohne Phasenübergang zunächst in einer ORC-Turbine (T) auf einen Druck unterhalb seines kritischen Druckes entspannt, siehe Fig. 3.3 (3), wobei es die mechanische Arbeit (A1) verrichtet. Im Rekuperator (4,7) findet ein interner Wärmeaustausch statt, um die Eintrittstemperatur ins Solarfeld einzustellen.
Die Entspannung vom überkritischen Bereich in den Bereich des überhitzten bis gesättigten Gases erfolgt phasenübergangsfrei, da das Zweiphasengebiet nur tangiert wird. Dies ist ein prinzipieller Vorteil im Verglich zu einer Dampfturbine, der vorteilhaft für eine automatische Lastregelung genutzt werden kann. Bei einer Dampfturbine muss die Überhitzung stets exakt eingehalten werden, damit der Wasserdampf bei der Entspannung nicht zu nass wird.

Danach erfolgt die Wärmeabgabe an einen sekundären Dampfturbinenkreisprozess (5), wobei das Wärmeträgerfluid kondensiert. Der Druck der kondensierten Wärmeträgerflüssigkeit wird im Beispiel mittels ORC-Pumpe (6) und HTF-Pumpe (8) erhöht.
Die Druckerhöhung kann auch einstufig erfolgen.

Nach dem Druckverlust in den Verteilerleitungen (Runner und Header) (9) liegt das Wärmeträgerfluid wieder als unterkühlte Flüssigkeit vor, um in den Receiverloops erneut Wärme aufzunehmen (1).

Im Unterschied zum Beispiel 2 ist die HTF Eintrittstemperatur in die ORC-Turbine (T) um 10°C höher als die Eintrittstemperatur des Arbeitsmediums (AM) in die Turbine (AMT) im sekundären Kreisprozess.

Für einen **idealen Carnot-Kreisprozess** ergibt sich für Beispiel 3 daher als Grenzwert ein theoretischer, praktisch nicht erreichbarer thermischer Wirkungsgrad ηₜₕ < 1- T_{Kondensation} [K] /T_{Dampf} [K] < **53,7%, der um 0,7% höher liegt als im Beispiel 2.**

Der primäre Wärmeträgerkreisprozess ist im **Fig. 3.3** im TP-Diagramm dargestellt.
Die HELISOL® 5A Menge zur Übertragung der thermischen Leistung im Solarfeld und die Enthalpiedifferenz sind identisch zum Beispiel 2.
Zur Bereitstellung der Antriebsleistung für die Pumpe P1 im primären Wärmeträgerkreis-prozess werden identisch zum Beispiel 2 nur 2,6% der im Solarfeld aufgenommenen Wärme verbraucht. Jedoch verrichtet HELISOL® 5A bei der Entspannung von 17,7 auf 7 bar in einer ORC-Turbine (isentrope Effizienz 92%) bereits 6,63 kJ/kg nutzbare mechanische Arbeit (A1).

In Summe ergibt sich im Beispiel 3 ein thermischer Gesamtwirkungsgrad (Turbinenleistungen (A1+A2) - Pumpenleistungen (AMP+ P2)) / zugeführte thermische Leistung in Höhe von **35,8 %** (+0,6% im Vergleich zu Beispiel 2)

Es muß die gleiche Menge an HELISOL® 5A durch das Solarfeld gepumpt werden, um 1 MW an thermischer Leistung aufzunehmen.

Wegen des besseren Gesamtwirkungsgrades muss für ein CSP-Kraftwerk mit der effektiven Arbeitsleistung von 50 MW jedoch nur noch eine thermische Leistung von 143,3 MW bereitgestellt werden (-5,0% im Vergleich zum Beispiel 1), zuzüglich von Wärmeverlusten.

### Beispiel 4

### Im Beispiel 4 wird WACKER QM4 statt WACKER HELISOL® 5A als HTF eingesetzt.

QM4 ist ein siloxanbasiertes Einkomponentensystem, das seinen kritischen Punkt bei ca. 350°C und 8 bar besitzt.
QM4 ist die Verbindung der allgemeinen Formel III, bei der z = 1 und w = 4.

Nach dem Stand der Technik wäre dieses Wärmeträgerfluid nicht im Hochtemperaturbereich > 350°C einsetzbar.
Erfindungsgemäß ist QM4 jedoch wie HELISOL® 5A als HTF-Fluid im Temperaturbereich bis 425 einsetzbar.

Der primäre Wärmeträgerkreisprozess mit QM4 ohne Arbeitsverrichtung ist in Fig. 3.4 im TP-Diagramm für den gleichen Anwendungsfall in einem CSP-Kraftwerk dargestellt, der dem Beispiel 2 mit HELISOL® 5A entspricht (zum Vergleich siehe Fig.3.3).

Im Vergleich zu HELISOL® 5A hat QM4 als Einkomponentensystem im TP-Diagramm eine Dampfdruckkurve, die am kritischen Punkt endet, während HELISOL® 5A als Mehrkomponentensystem im TP-Diagramm ein Zweiphasengebiet mit Siedekurve und Taukurve besitzt, die beide im kritischen Punkt des Gemisches zusammenlaufen und enden.

Bei QM4 ist der überkritische Bereich deutlich ausgeprägter als bei HELISOL® 5A.
Zur Übertragung von 1 MW thermischer Leistung werden 13, 12 t/h QM4 benötigt, die Enthalpiedifferenz beträgt 274 kJ/kg.

Der thermische Wirkungsgrad des Sekundärkreisprozesses ist 35,2% und identisch zum Beispiel 2.
Zur Bereitstellung der Antriebsleistung für die Pumpe P1 im primären Wärmeträgerkreis-prozess werden 3,2% (statt 2,6% im Beispiel 2) der im Solarfeld aufgenommenen Wärme verbraucht.

Für ein CSP-Kraftwerk mit der effektiven Arbeitsleistung von 50 MW muss eine thermische Leistung von 146,7 MW bereitgestellt werden. (+0,6% im Vergleich zum Beispiel 2), zuzüglich von Wärmeverlusten.

### Beispiel 5

### Der primäre Wärmeträgerkreisprozess mit QM4 mit Arbeitsverrichtung ist in Fig. 3.5 im TP-Diagramm für den gleichen Anwendungsfall in einem CSP-Kraftwerk dargestellt, der dem Beispiel 3 mit HELISOL® 5A entspricht (siehe Fig.3.3).

Der gesamte primäre Wärmeträgerkreisprozess erfolgt nun um den kritischen Punkt herum, der sich quasi im Zentrum befindet.

Im Beispiel 5 übernimmt die ORC-Turbine 6,5% der effektiven Gesamtarbeitsleistung, während sie im Beispiel 3 nur 4,3% zur effektiven Gesamtarbeitsleistung beiträgt.

Der thermische Gesamtwirkungsgrad im Beispiel 5 beträgt 36,3% und ist damit um 0,5% höher als im Beispiel 3 im HELISOL® 5A.

Für ein CSP-Kraftwerk mit der effektiven Arbeitsleistung von 50 MW muss daher nur noch eine thermische Leistung von 142,2 MW aus dem Solarfeld bereitgestellt werden (-5,8% im Vergleich zum Referenzbeispiel 1 nach Stand der Technik).

## Patentansprüche

1. Kreisprozesse mit Siloxanen als Hochtemperaturwärmeträgerfluid (HTF), bei denen die Siloxane durch Wärmeaufnahme ohne Phasenübergang aus dem Zustand der unterkühlten Flüssigkeit in den Zustand des überkritischen Fluids hoher Dichte übergehen und danach ohne Phasenübergang Energie abgeführt wird.

2. Kreisprozesse nach Anspruch 1, bei denen die Siloxane im Zustand der überkritischen Flüssigkeit abgekühlt werden und dabei Wärme an einen Wärmeverbraucher abgeben.

3. Kreisprozesse nach Anspruch 1, bei denen die Siloxane im Zustand der überkritischen Flüssigkeit zur direkten Erzeugung mechanischer Arbeit zunächst unter ihren kritischen Druck entspannt und erst anschließend zur Wärmeabgabe an einen Wärmeverbraucher abgekühlt und kondensiert werden.

4. Kreisprozesse nach einem oder mehreren der vorangehenden Ansprüche, bei denen die als HTF eingesetzten Siloxane aus Methylpolysiloxanen bestehen.

5. Kreisprozesse nach Anspruch 4, bei denen die als HTF eingesetzten Siloxane Gemische aus Methylpolysiloxanen sind, ausgewählt aus linearen Verbindungen der allgemeinen Formel I
Me₃SiO-(Me₂SiO)ₓ-SiMe₃ (I),
und cyclischen Verbindungen der allgemeinen Formel II
(Me₂SiO)_{y} (II),
wobei
**Me** Methylrest bedeutet,
**x** Werte größer oder gleich Null aufweist und der mit den Stoffmengenanteilen gewichtete arithmetische Mittelwert von **x** über alle linearen Methylpolysiloxane zwischen 3 und 20 liegt und
**y** Werte größer oder gleich 3 aufweist und der mit den Stoffmengenanteilen gewichtete arithmetische Mittelwert von **y** über alle cyclischen Methylpolysiloxane zwischen 3 und 6 liegt.

6. Kreisprozesse nach Anspruch 4, bei denen die als HTF eingesetzten Siloxane ausgewählt werden aus verzweigten Verbindungen der allgemeinen Formel III
(Me₃SiO_{1/2})_{w} (SiO_{4/2})_{z}, (III)
in der
**w** ganzzahlige Werte von 4 bis 20,
**z** ganzzahlige Werte von 1 bis 15 und
**Me** Methylrest bedeuten.

## Claims

1. Circular processes using siloxanes as high-temperature heat transfer fluid (HTF), wherein the siloxanes go over from the state of the supercooled liquid into the state of the high-density supercritical fluid by means of heat uptake without a phase transition and energy is then transferred without a phase transition.

2. Circular processes according to Claim 1, wherein the siloxanes are cooled in the state of the supercritical liquid and in the process transfer heat to a heat consumer.

3. Circular processes according to Claim 1, wherein the siloxanes in the state of the supercritical liquid are firstly depressurized to below their critical pressure in order to generate mechanical work directly and only then are cooled and condensed in order to transfer heat to a heat consumer.

4. Circular processes according to one or more of the preceding claims, wherein the siloxanes used as HTF consist of methylpolysiloxanes.

5. Circular processes according to Claim 4, wherein the siloxanes used as HTF are mixtures of methylpolysiloxanes selected from among linear compounds of the general formula I
Me₃SiO-(Me₂SiO)ₓ-SiMe₃ (I),
and cyclic compounds of the general formula II
(Me₂SiO)_{y} (II),
where
**Me** is a methyl radical,
**x** has values of greater than or equal to zero and the arithmetic mean of **x** weighted according to the molar proportions over all linear methylpolysiloxanes is in the range from 3 to 20 and
**y** has values of greater than or equal to 3 and the arithmetic mean of **y** weighted according to the molar proportions over all cyclic methylpolysiloxanes is in the range from 3 to 6.

6. Circular processes according to Claim 4, wherein the siloxanes used as HTF are selected from among branched
compounds of the general formula III
(Me₃SiO_{1/2})_{w} (SiO_{4/2})_{z}, (III)
where
**w** is integers from 4 to 20,
**z** is integers from 1 to 15 and
**Me** is a methyl radical.

## Revendications

1. Procédés en boucle comportant des siloxanes en tant que fluide caloporteur à haute température (HTF), dans lesquels les siloxanes sont transférés par absorption thermique sans transition de phase de l'état de liquide sous-refroidi à l'état de fluide supercritique haute densité et de l'énergie est ensuite évacuée sans transition de phase.

2. Procédés en boucle selon la revendication 1, dans lesquels les siloxanes à l'état de liquide supercritique sont refroidis et libèrent ainsi de la chaleur au niveau d'un consommateur de chaleur.

3. Procédés en boucle selon la revendication 1, dans lesquels les siloxanes à l'état de liquide supercritique sont d'abord relâchés sous leur pression critique pour la production directe de travail mécanique et sont seulement par la suite refroidis et condensés pour la libération de chaleur au niveau d'un consommateur de chaleur.

4. Procédés en boucle selon l'une quelconque ou plusieurs des revendications précédentes, dans lesquels les siloxanes utilisés en tant que HTF sont constitués de méthylpolysiloxanes.

5. Procédés en boucle selon la revendication 4, dans lesquels les siloxanes utilisés en tant que HTF sont des mélanges constitués de méthylpolysiloxanes, choisis parmi des composés linéaires de formule générale I
Me₃SiO-(Me₂SiO)ₓ-SiMe₃ (I),
et des composés cycliques de formule générale II
(Me₂SiO)_{y} (II),
Me signifiant un radical méthyle,
x présentant des valeurs supérieures ou égales à zéro et la moyenne arithmétique pondérée avec les fractions molaires de x sur tous les méthylpolysiloxanes linéaires étant comprise entre 3 et 20 et
y présentant des valeurs supérieures ou égales à 3 et la moyenne arithmétique pondérée avec les fractions molaires de y sur tous les méthylpolysiloxanes cycliques étant comprise entre 3 et 6.

6. Procédés en boucle selon la revendication 4, dans lesquels les siloxanes utilisés en tant que HTF sont choisis parmi des composés ramifiés de formule générale III
(Me₃SiO_{1/2})_{w} (SiO_{4/2})_{z}, (III)
dans laquelle
w signifie des valeurs entières de 4 à 20,
z signifie des valeurs entières de 1 à 15 et
Me signifie un radical méthyle.
